# EUROPEAN PATENT APPLICATION

(11) **EP 4 559 562 A1**
(43) Date of publication of application: **28.05.2025**
(21) Application number: 23211738.2
(22) Date of filing: 23.11.2023
(51) Int. Cl.: B01D 53/58, B01D 53/77

(54) **SYSTEM AND METHOD FOR REDUCING AMMONIA EMISSIONS IN AN INDUSTRIAL PLANT**

(71) Applicant: Yara International ASA, 0277 Oslo (NO)
(72) Inventor: Vidts, Pieter, 9050 Gentbrugge (BE); d'Hooghe, Nikolaj Pieter Agnes Maria, 4561 ZZ Hulst (NL)
(74) Representative: De Clercq & Partners

(57) **Abstract**

In a first aspect, the present disclosure provides a system comprising a first device (1), a second device (2), a scrubber (3) fluidically connected to the second device (2) and an ejector (4) fluidically connected to the first device (1) and the second device (2).

In another aspect, the present disclosure provides a method for removing ammonia from a first gaseous stream generated by a first device (1), the first gaseous stream comprising ammonia and having a pressure being at most atmospheric pressure.

## Description

### Field of the disclosure

The present disclosure is related to the field of chemical engineering, in particular for reducing ammonia emissions in an industrial plant.

### Background information

Industrial plants produce large amounts of useful chemicals, but also significant amounts of waste streams comprising polluting compounds that are harmful to the environment. Ammonia (NH₃) is a nitrogen-containing small molecule that can be used to manufacture a wide variety of products, including nitric acid and urea which are key fertilizer products. Industrial plants, such as fertilizer plants, that consume ammonia to produce different products often generate gaseous waste streams comprising ammonia and are usually subject to strict regulations that limit the amount of ammonia that they are allowed to release in the atmosphere.

So, there is always a need to invent new systems that can further reduce ammonia emissions in industrial plants.

### Summary of the disclosure

It has been found that gas streams having a pressure of at most atmospheric pressure and comprising ammonia can be processed in a scrubber to reduce their ammonia concentration using an ejector and a second gaseous stream comprising ammonia and having a pressure above atmospheric pressure.

In a first aspect, the present disclosure provides a system comprising a first device capable of emitting a first gaseous stream comprising ammonia at a pressure of at most atmospheric pressure, a second device configured to produce a second gaseous stream comprising ammonia at a pressure above atmospheric pressure, a scrubber fluidically connected to the second device, the scrubber being configured to receive the second gaseous stream and to remove ammonia from the second gaseous stream, wherein the system comprises an ejector fluidically connected to the first device and the second device, the ejector being configured to inject the first gaseous stream into the scrubber using a portion of the second gaseous stream as motive fluid.

In another aspect, the present disclosure provides a method for removing ammonia from a first gaseous stream generated by a first device, the first gaseous stream comprising ammonia and having a pressure being at most atmospheric pressure, the method comprising the steps of:
a. directing the first gaseous stream to an ejector, the ejector being fluidically connected to a scrubber, wherein the scrubber is fluidically connected to a second device and configured to receive a second gaseous stream from the second device and to remove ammonia from the second gaseous stream;
b. directing a portion of the second gaseous stream from the second device to the ejector, such that the portion of the second gaseous stream is used as motive fluid by the ejector, thereby creating a third gaseous stream comprising the first gaseous stream and the portion of the second gaseous stream, the third gaseous stream having a pressure above atmospheric pressure, wherein the other portion of the second gaseous stream not being directed to the ejector is directed to the scrubber;
c. directing the third gaseous stream to the scrubber;
d. providing an acidic aqueous solution to the scrubber; and
e. recovering a fourth gaseous stream from a gas outlet of the scrubber depleted of ammonia.

In another aspect, the present disclosure provides the use of an ejector for injecting a first gaseous stream comprising ammonia, the first gaseous stream having a pressure of at most atmospheric pressure, into a scrubber using a portion of a second gaseous stream comprising ammonia at a pressure above atmospheric pressure as motive fluid.

### Brief description of the figures

The following description of the figure of a specific embodiment of a system according to the present disclosure is only given by way of example and is not intended to limit the present explanation, its application or use. In the figure, identical reference numerals refer to the same or similar parts and features.

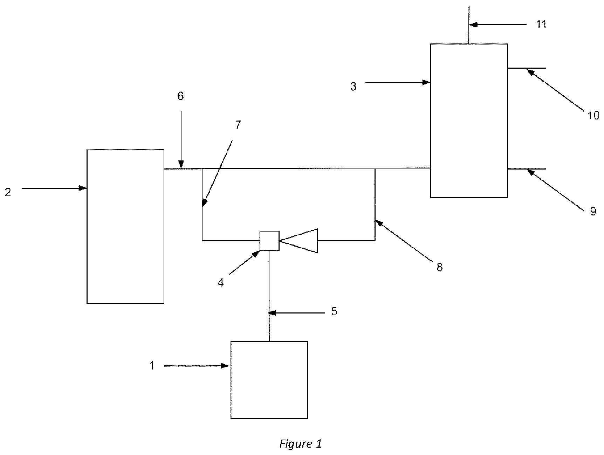

Figure 1 shows an embodiment of a system according to the present disclosure.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a device" refers to one or more than one device.

"Comprise", "comprising", and "comprises" and "comprised of" as used herein are synonymous with "include", "including", "includes" or "contain", "containing", "contains" and are inclusive or open-ended terms that specifies the presence of what follows e.g., component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

In a first aspect, the present disclosure provides a system comprising a first device capable of emitting a first gaseous stream comprising ammonia at a pressure of at most atmospheric pressure, a second device configured to produce a second gaseous stream comprising ammonia at a pressure above atmospheric pressure, a scrubber fluidically connected to the second device, the scrubber being configured to receive the second gaseous stream and to remove ammonia from the second gaseous stream, wherein the system comprises an ejector fluidically connected to the first device and the second device, the ejector being configured to inject the first gaseous stream into the scrubber using a portion of the second gaseous stream as motive fluid.

Industrial plants that consume ammonia can comprise one or more scrubbers. A scrubber is a device configured to receive a gaseous stream and to remove pollutants, such as ammonia, from the gaseous stream. The pollutants may be removed with different techniques. To remove ammonia from a gaseous stream, a common technique is to contact the gaseous stream with an aqueous solution comprising an acid. Upon contact of the gaseous stream with the aqueous solution, ammonia dissolves into water and reacts with the acid to form an ammonium ion, which is soluble in water. Accordingly, the scrubber produces two streams: a gaseous stream depleted of ammonia, and an aqueous solution comprising an ammonium ion. A scrubber comprises at least one gas inlet, one gas outlet, one liquid inlet and one liquid outlet. In some embodiments, a scrubber comprises at least two gas inlets. In some embodiments, a scrubber comprises at least three gas inlets.

Scrubbers may be configured to operate at different pressures, but most industrial plants comprise at least a scrubber configured to operate at atmospheric pressure or just above atmospheric pressure, and the gaseous stream depleted of ammonia produced by the scrubber is released in the atmosphere.

Such a scrubber requires that the gaseous streams to be cleaned have a pressure above atmospheric pressure, for example with a pressure of at least 105 kPa, such that the gas stream can flow from a gas inlet of the stripper to the gas outlet.

A scrubber may not be able to remove absolutely all the ammonia comprised in a gaseous stream, but it may decrease the ammonia content to the gaseous stream so low, for example less than 0.1 ppm, so that it is safe and legal to release the gaseous stream into the atmosphere.

An industrial plant, such as a fertilizer plant, usually comprises several devices capable of emitting a gaseous stream comprising ammonia that needs to be cleaned before being released in the atmosphere. These devices may be configured to operate at different pressures depending on their exact function.

In some embodiments, the device capable of emitting a first gaseous stream comprising ammonia is selecting from the group of an absorber, a pressure safety valve, or a container configured to contain an aqueous solution, in particular a container configured to contain an aqueous solution comprising ammonia and/or urea. An industrial plant may comprise containers or tanks, that are configured to hold or contain aqueous solutions, that may contain free ammonia dissolved in water, ammonium ions, and/or urea. These solutions are capable of emitting gas streams comprising ammonia. The aqueous solution may be process condensate, i.e., an aqueous solution obtained from condensing a gaseous stream comprising water vapor.

In some embodiments, the container configured to contain an aqueous solution may be any container configured to operate at atmospheric pressure, i.e., the solution contained in the container and the gas in the headspace of the container are designed to be atmospheric pressure.

An absorber is a device comprising at least one gas inlet and at least one gas outlet. The absorber comprises a material suitable for absorbing a component comprised in a gas stream. An absorber can be used to remove ammonia from a gas stream, but the gas released from the gas outlet may still comprise such amounts of ammonia that it is not suitable to be released in the atmosphere. In some embodiments, the material suitable for absorbing a component, such as ammonia, is an aqueous solution. In some embodiments, the absorber can comprise a liquid inlet for an absorbing liquid, a liquid outlet for an absorbing liquid comprising a dissolved component from the gas stream, a gas inlet, and a gas outlet.

In some embodiments, the absorber comprises two or more liquid inlets. Some absorbers may comprise different absorbing stages that each require a liquid inlet to feed an absorbing liquid in each stage. Such absorbers may comprise one or more liquid outlets. The solutions containing the absorbed component may be joined inside the absorber, such that the absorber only requires one liquid outlet, thereby simplifying the connection of the absorber to the rest of the plant.

A pressure safety valve is a type of pressure-relieving component that is configured to be fluidically connected to another device or pipe: when the pressure inside the device or pipe reaches a certain critical value, the pressure safety valve opens up and allows the fluid present in the device or pipe to escape via the pressure safety valve, thereby lowering the pressure inside the device or pipe. Pressure safety valves may not be completely hermetically sealed to a device or pipe, so it may continuously release a very low amount of gas stream in operations. Such emissions may be referred to as fugitive emissions of the pressure safety valve. So, it may be an advantage to fluidically connect a pressure safety valve to a scrubber via an ejector to remove ammonia from the gas stream emitted by the valve.

The second device comprised in the system is configured to produce a second gaseous stream comprising ammonia at a pressure above atmospheric pressure. Industrial plants, such as fertilizer plants, often comprise devices operating at different pressures and often comprise at least one device operating at a pressure above atmospheric pressure. For example, the second device may be an absorber configured to receive a gaseous stream at a pressure above atmospheric, to reduce the content in one or more components of the gaseous stream, and release a gaseous stream depleted of one or more components at a pressure above atmospheric.

Such device may be directly connected, without requiring any additional devices, such as a fan or pump, with a scrubber operating at atmospheric pressure since the pressure difference between the outlet of the second device and the inlet of the scrubber is positive.

To remove ammonia from the first gaseous stream emitted by the first device, different systems and methods may be used. However, the system according to the present disclosure has several important advantages: it requires minimal disturbance to the system, it has a very low cost, it is very efficient at removing ammonia from the first gaseous stream.

The present system comprises an ejector fluidically connected to the first device and the second device, the ejector being configured to produce a third gaseous stream and inject this third gaseous stream into the scrubber. An ejector is a device comprising two fluid inlets, and a fluid outlet. It may be configured to receive a gaseous stream and a liquid stream, two liquid streams, or two gaseous streams. The two streams have different pressures, and using a Venturi effect, the two streams are combined to create a new stream having a pressure between the pressures of the two streams received by the ejector. The fluid stream with the highest pressure is usually called the motive fluid, and the fluid with the lowest pressure is usually called the suction fluid. In the present disclosure, the motive fluid is the portion of the second gaseous stream produced by the second device, and the suction fluid is the first gaseous stream.

The second gaseous stream is configured to be directed to the scrubber, and in the present system, the ejector receives a portion of the second gaseous stream to be used as motive fluid, while the remainder of the second stream is still configured to be directly injected into the scrubber. This enables the ejector to transform the first gaseous stream comprising ammonia at a pressure of at most atmospheric pressure into a third gaseous stream comprising ammonia at a pressure above atmospheric pressure.

The ammonia content of the third gaseous stream may be higher or lower than the ammonia content of the first gaseous stream, depending on the ammonia content of the second gaseous stream.

The addition of the ejector to the system is minimal because the entire second gaseous stream still enters the scrubber, such that ammonia comprised in the second gaseous stream produced by the second device is partly or fully captured by the scrubber. In addition, the ammonia comprised in the first gaseous stream is also partly or fully captured by the scrubber.

In some embodiments, the first device is capable of emitting a first gaseous stream comprising ammonia at a pressure ranging from 1 kPa to 101 kPa.

In some embodiments, the second device is configured to produce a second gaseous stream comprising ammonia at a pressure of at least 0.2 MPa. In some embodiments, the second device is configured to produce a second gaseous stream comprising ammonia at a pressure ranging from 0.2 MPa to 1.0 MPa. A plant producing urea often comprises one high-pressure section, wherein the pressure of the gas streams is above 1.0 MPa, and one low-pressure section, wherein the pressure of the gas streams is from 0.105 MPa to 0.4 MPa. In addition, some urea plants comprise a mediumpressure section, wherein the pressure of the gas streams is from 0.4 MPa to 1.0 MPa.

In some embodiments, the second device is a device comprised on the low-pressure section of a urea-producing plant.

In some embodiments, the system according to the present disclosure is comprised in a urea-producing plant.

In some embodiments, the second device is an absorber.

In some embodiments, the first device is a device comprised in a urea-producing plant.

In some embodiments, the first device is a container configured to contain an aqueous solution comprising ammonia, in particular a container configured to contain process condensate. Industrial plants often produce aqueous waste streams at atmospheric pressure. For example, it may comprise one or more condensers configured for condensing gaseous streams comprising water vapor. If a gaseous stream comprises water vapor and ammonia, the solution obtained by condensing the gaseous stream is an aqueous solution comprising ammonia. Such aqueous solution may be stored in a container at atmospheric pressure and can emit a gaseous stream comprising ammonia due to the low boiling point (-33 °C) and the low vapor pressure of ammonia.

In some embodiments, the first device is an absorber configured to operate at atmospheric pressure, or below atmospheric pressure.

In some embodiments, the scrubber is configured to remove ammonia from a gaseous stream by contacting the gaseous stream with an aqueous solution comprising an acid, in particular wherein the aqueous solution comprises nitric acid, phosphoric acid, or sulphuric acid. Scrubbers may operate in different manners to remove pollutants, in particular ammonia, from a gaseous stream, but one of the method involves contacting the gaseous stream with an acidic aqueous solution. Ammonia has a limited solubility in water, but if it reacts with an acid, it forms an ammonium ion that are usually very soluble in water. Acids, such as nitric acid, phosphoric acid, and sulphuric acid, are often used in industrial plants, in particular in fertilizer-producing plants, they react very quickly with ammonia and form ion pairs with a high water-solubility, so they are good acids to be added in the aqueous solution of a scrubber.

In some embodiments, the scrubber is configured to release a gas stream depleted of ammonia via a gas inlet, the gas stream being at atmospheric pressure or just above atmospheric pressure, for example 102 kPa, 103 kPa or 104 kPa.

In another aspect, the present disclosure provides a method for removing ammonia from a first gaseous stream generated by a first device, the first gaseous stream comprising ammonia and having a pressure being at most atmospheric pressure, the method comprising the steps of:
a. directing the first gaseous stream to an ejector, the ejector being fluidically connected to a scrubber, wherein the scrubber is fluidically connected to a second device and configured to receive a second gaseous stream from the second device and to remove ammonia from the second gaseous stream;
b. directing a portion of the second gaseous stream from the second device to the ejector, such that the portion of the second gaseous stream is used as motive fluid by the ejector, thereby creating a third gaseous stream comprising the first gaseous stream and the portion of the second gaseous stream, the third gaseous stream having a pressure above atmospheric pressure, wherein the other portion of the second gaseous stream not being directed to the ejector is directed to the scrubber;
c. directing the third gaseous stream to the scrubber;
d. providing an acidic aqueous solution to the scrubber; and
e. recovering a fourth gaseous stream from a gas outlet of the scrubber depleted of ammonia.

In the present method, two gaseous streams are provided to an ejector: a first gaseous stream comprising ammonia, the first gaseous stream being at a pressure of at most atmospheric pressure; and a second gaseous stream comprising ammonia, the second gaseous stream being at a pressure above atmospheric pressure. The first and second gaseous streams are combined inside the ejector to produce a third gaseous stream that exits the ejector.

The third gaseous stream comprises ammonia and has a pressure above atmospheric pressure that is at most the pressure of the second gaseous stream. The third gaseous stream leaving the ejector may be directly directed to the scrubber. Alternatively, the third gaseous stream may be mixed with another gaseous stream directed to the scrubber. In some embodiments, the third gaseous stream is mixed with the portion of the second gaseous stream that was not directed to the ejector, and the gaseous stream comprising the third gaseous stream and the second gaseous stream is directed to the scrubber.

The scrubber continuously receives an acidic aqueous solution that interacts with the gaseous stream entering the scrubber. Upon interaction, the ammonia comprised in the gaseous stream solubilizes into the aqueous solution and reacts with the acid comprised therein to form ammonium ions. The reaction of free ammonia into ammonium drives the solubilization of gaseous ammonia into the aqueous solution.

In some embodiments, the acidic aqueous solution comprises one or more compounds selected from the group consisting of nitric acid, phosphoric acid, and sulfuric acid. These acids are commonly used in fertilizer production and may be available in the plant.

The scrubber may comprise a means for creating a mist with the acidic aqueous solution. Creating a mist increases the surface of interaction between the gaseous stream and the acidic aqueous solution and can improve the removal of ammonia from the gaseous stream.

The scrubber may comprise pads or filter screens. Pads or filter screens are used in scrubbers to improve the interaction between the gaseous stream and the acidic aqueous solution and improve the removal of ammonia from the gaseous stream. The acidic aqueous solution can be sprayed onto the pads or filter screens.

In some embodiments, the first gaseous stream has a pressure ranging from 1 kPa to 101 kPa.

In some embodiments, the second gaseous stream has a pressure ranging from 105 kPa to 400 kPa.

In some embodiments, the third gaseous stream has a pressure ranging from 105 kPa to 400 kPa.

In some embodiments, the first gaseous stream has an ammonia concentration ranging from 1 to 10 000 ppm, from 10 to 10 000 ppm, from 10 to 1 000 ppm, from 100 to 10 000 ppm, or from 100 to 1 000 ppm. The ammonia concentration in the first gaseous stream depends on the source of the first gaseous stream.

In some embodiments, the second gaseous stream has an ammonia concentration ranging from 1 to 10 000 ppm.

In some embodiments, the third gaseous stream at the outlet of the ejector has an ammonia concentration ranging from 1 to 10 000 ppm, from 10 to 10 000 ppm, from 10 to 1000 ppm, from 100 to 10 000 ppm, or from 100 to 1 000 ppm. The ammonia concentration in the third gaseous stream depends on the ammonia concentration of the first gaseous stream and of the second gaseous stream.

The first, second and third gaseous streams may have the same ammonia concentration or different concentrations.

In some embodiments, the fourth gaseous stream recovered from the scrubber has an ammonia concentration of at most 100 ppm, at most 50 ppm, at most 10 ppm, or at most 1 ppm. In some embodiments, the fourth gaseous stream recovered from the scrubber has an ammonia concentration ranging from 0 to 100 ppm, from 0 to 50 ppm, from 0 to 10 ppm, or from 0 to 5.0 ppm. A scrubber can achieve a very high removal rate of ammonia from a gaseous stream and produce a gaseous stream that is safe and legal to discharge in the atmosphere.

In another aspect, the present disclosure provides a method for revamping a plant comprising a first device capable of emitting a first gaseous stream comprising ammonia at a pressure of at most atmospheric pressure, a second device configured to produce a second gaseous stream comprising ammonia at a pressure above atmospheric pressure, a scrubber fluidically connected to the second device, the scrubber being configured to receive the second gaseous stream and to remove ammonia from the second gaseous stream, the method comprising the step of fluidically connecting an ejector to the first device and the second device, the ejector being configured to inject the first gaseous stream into the scrubber using a portion of the second gaseous stream as motive fluid.

In some embodiments, the revamping method is performed in a urea-producing plant.

In another aspect, the present disclosure provides the use of an ejector for injecting a first gaseous stream comprising ammonia, the first gaseous stream having a pressure of at most atmospheric pressure, into a scrubber using a portion of a second gaseous stream comprising ammonia at a pressure above atmospheric pressure as motive fluid.

Figure 1 shows an embodiment of a system according to the present disclosure. The system comprises a first device **1,** such as an absorber, that emits, in operation, a first gaseous stream comprising ammonia at atmospheric pressure. An absorber can be fluidically connected to a container configured to hold an aqueous solution comprising ammonia, for example process condensate. The system also comprises a second device **2,** that may also be an absorber and is configured to produce a second gaseous stream comprising ammonia at a pressure above atmospheric pressure, for example between 300 and 400 kPa. The second device **2** is fluidically connected, via line **6,** to an acidic scrubber **3,** which is configured to remove ammonia from gaseous streams using an acidic aqueous solution. The system comprises an ejector **4,** that is fluidically connected to the first device **1** via line **5** and the second device **2** via line **7.** The ejector **4** is configured to receive a portion of the second gaseous stream generated by the second device **2** and use that stream as motive fluid to increase the pressure of the first gaseous stream emitted by the first device **1.** The exit of the ejector **4** is fluidically connected to line **6** via line **8,** such that the third gaseous stream produced by the ejector **4** is directed to the scrubber **3.** The scrubber **3** comprises a gas inlet to receive the mixture of the second gaseous stream and the third gaseous stream, a liquid inlet **10** for receiving an aqueous acidic solution, a liquid outlet **9** for removing an aqueous solution comprising an ammonium ion, from the scrubber, and a gas outlet **11** for removing a fourth gaseous stream depleted of ammonia from scrubber **3.**

## Claims

1. A system comprising a first device capable of emitting a first gaseous stream comprising ammonia at a pressure of at most atmospheric pressure, a second device configured to produce a second gaseous stream comprising ammonia at a pressure above atmospheric pressure, a scrubber fluidically connected to the second device, the scrubber being configured to receive the second gaseous stream and to remove ammonia from the second gaseous stream, **characterized in that** the system comprises an ejector fluidically connected to the first device and the second device, the ejector being configured to inject the first gaseous stream into the scrubber using a portion of the second gaseous stream as motive fluid.

2. The system according to claim 1, wherein the second device is configured to produce a second gaseous stream comprising ammonia at a pressure of at least 0.2 MPa.

3. The system according to claim 1 or 2, wherein the second device is an absorber.

4. The system according to any one of claims 1 to 3, wherein the first device is an absorber configured to operate at atmospheric pressure, a pressure safety valve or a container configured to contain an aqueous solution, in particular a container configured to contain an aqueous solution comprising ammonia and/or urea.

5. The system according to any one of claims 1 to 4, wherein the scrubber is configured to remove ammonia from the second gaseous stream by contacting the second gaseous stream with an aqueous solution comprising an acid, in particular wherein the aqueous solution comprises nitric acid, phosphoric acid, or sulphuric acid.

6. The system according to any one of claims 1 to 5, wherein the scrubber is configured to release a gas stream depleted of ammonia via a gas inlet, the gas stream being at atmospheric pressure.

7. A method for removing ammonia from a first gaseous stream generated by a first device, the first gaseous stream comprising ammonia and having a pressure being at most atmospheric pressure, the method comprising the steps of:
a. directing the first gaseous stream to an ejector, the ejector being fluidically connected to a scrubber, wherein the scrubber is fluidically connected to a second device and configured to receive a second gaseous stream from the second device and to remove ammonia from the second gaseous stream;
b. directing a portion of the second gaseous stream from the second device to the ejector, such that the portion of the second gaseous stream is used as motive fluid by the ejector, thereby creating a third gaseous stream comprising the first gaseous stream and the portion of the second gaseous stream, the third gaseous stream having a pressure above atmospheric pressure, wherein the other portion of the second gaseous stream not being directed to the ejector is directed to the scrubber;
c. directing the third gaseous stream to the scrubber;
d. providing an acidic aqueous solution to the scrubber; and
e. recovering a fourth gaseous stream depleted of ammonia from a gas outlet of the scrubber.

8. The method according to claim 7, wherein the first gaseous stream has a pressure ranging from 1 kPa to 101 kPa.

9. The method according to claim 7 or 8, wherein the second gaseous stream has a pressure ranging from 105 kPa to 400 kPa.

10. The method according to any one of claims 7 to 9, wherein the third gaseous stream has a pressure ranging from 105 kPa to 400 kPa.

11. The method according to any one of claims 7 to 10, wherein the first gaseous stream, the second gaseous stream, and the third gaseous stream have an ammonia concentration ranging from 1 to 10 000 ppm.

12. A method for revamping a plant comprising a first device capable of emitting a first gaseous stream comprising ammonia at a pressure of at most atmospheric pressure, a second device configured to produce a second gaseous stream comprising ammonia at a pressure above atmospheric pressure, a scrubber fluidically connected to the second device, the scrubber being configured to receive the second gaseous stream and to remove ammonia from the second gaseous stream, the method comprising the step of fluidically connecting an ejector to the first device and the second device, the ejector being configured to inject the first gaseous stream into the scrubber using a portion of the second gaseous stream as motive fluid.

13. The use of an ejector for injecting a first gaseous stream comprising ammonia, the first gaseous stream having a pressure of at most atmospheric pressure, into a scrubber using a portion of a second gaseous stream comprising ammonia at a pressure above atmospheric pressure as motive fluid.
